# EUROPEAN PATENT SPECIFICATION

(11) **EP 4 567 144 B1**
(45) Date of publication and mention of the grant of the patent: **21.10.2026**
(21) Application number: 23874573.1
(22) Date of filing: 30.08.2023
(51) Int. Cl.: C22C 33/02, B22F 1/052, B22F 10/25, B22F 10/28, B22F 10/36, B22F 10/366, B33Y 10/00, B33Y 50/02, B33Y 70/00, B33Y 80/00, C22C 38/00, C22C 38/06, C22C 38/28, B22F 10/47

(54) **FE-CR-AL-BASED ALLOY POWDER FOR ADDITIVE MANUFACTURING, FE-CR-AL-BASED ALLOY MEMBER, AND METHOD FOR PRODUCING FE-CR-AL-BASED ALLOY MEMBER**
FE-CR-AL-BASIERTES LEGIERUNGSPULVER ZUR GENERATIVEN FERTIGUNG, FE-CR-AL-BASIERTES LEGIERUNGSELEMENT UND VERFAHREN ZUR HERSTELLUNG EINES FE-CR-AL-BASIERTEN LEGIERUNGSELEMENTS
POUDRE D'ALLIAGE À BASE DE FE-CR-AL DESTINÉE À LA FABRICATION ADDITIVE, ÉLÉMENT EN ALLIAGE À BASE DE FE-CR-AL ET PROCÉDÉ DE PRODUCTION D'ÉLÉMENT EN ALLIAGE À BASE DE FE-CR-AL

(30) Priority: 04.10.2022 JP 2022160058
(43) Date of publication of application: 11.06.2025
(73) Proprietor: Proterial, Ltd., Tokyo 135-0061 (JP)
(72) Inventor: NIU, Jing, Tokyo 135-0061 (JP); AOTA, Kinya, Tokyo 135-0061 (JP); KUWABARA, Kousuke, Tokyo 135-0061 (JP)
(74) Representative: Becker, Eberhard
(86) International application number: PCT/JP2023/031549
(87) International publication number: WO 2024/075443

(56) References cited:
- WO-A1-2021/228960
- WO-A1-2021/228960
- JP-A- 2005 220 438
- JP-A- 2005 220 438
- JP-A- S54 141 314
- JP-A- S54 141 314
- WANG YANAN ET AL: "Laser-based powder bed fusion of pre-alloyed oxide dispersion strengthened steel containing yttrium", ADDITIVE MANUFACTURING, ELSEVIER, NL, vol. 58, 1 July 2022 (2022-07-01), XP087158931, ISSN: 2214-8604, [retrieved on 20220701], DOI: 10.1016/J.ADDMA.2022.103018

## Description

### Technical Field

The present invention relates to a Fe-Cr-Al-based alloy powder for additive manufacturing, a Fe-Cr-Al-based alloy member, and a method for producing a Fe-Cr-Al-based alloy member.

### Related Art

Fe-Cr-Al-based alloy has advantages such as high resistivity, good thermal stability, and long service life. In addition, it can generate aluminum oxide, chromium oxide, or composite oxide film with protective function on its surface at high temperatures, and has the ability to resist oxidation, carburization, sulfur, and hydrogen gas corrosion at high temperatures. Thus, it is used as members and parts in industrial diffusion furnaces, high-temperature furnaces, chemical plants, semiconductor manufacturing processes, etc. Especially for parts in highly corrosive high-temperature environments, Fe-Cr-Al-based alloy with excellent oxidation resistance at high-temperature (hereinafter referred to as high-temperature oxidation resistance) is selected.

Moreover, as the design of the aforementioned members and parts becomes increasingly complex, there is a growing demand for complex shape formation that is difficult to achieve through die forging or machining. Consequently, in recent years, additive manufacturing is being applied to the production of members with complex shapes.

Manufacturing methods for Fe-Cr-Al-based alloy powder suitable for additive manufacturing using vacuum gas atomizing method are disclosed in Patent Literature 1 and Patent Literature 2. Further, Patent Literature 2 discloses additive manufacturing (AM) as a manufacturing method for Fe-Cr-Al-based alloy members. Additive manufacturing obtains a three-dimensional additively manufactured article by repeatedly supplying a heat source to raw material powder to melt and solidify it. According to additive manufacturing (hereinafter may be referred to as additive manufacturing method), even for complex shapes, three-dimensional members or products (hereinafter referred to as additively manufactured articles) can be obtained in net shape or near net shape.

By using additive manufacturing, it is possible to obtain members with complex shapes in net shape or near net shape, and when applied to alloys with high-temperature oxidation resistance, it can provide excellent properties in both strength and oxidation resistance. However, Fe-Cr-Al-based alloy members are known to undergo ductile-brittle transition (DBT) in the low-temperature range (100°C to 350°C) because they are composed of body centered cubic (BCC) phase structure. In particular, the additive manufacturing method is prone to solid-state cracking (SSC) due to DBT caused by high thermal stress from rapid cooling rates. According to Non-Patent Literature 1, cracking occurs in additively manufactured articles obtained by additive manufacturing method from Fe-Cr-Al-based alloy powder, and the decrease in ductility is a problem.

WO 2021/228960 A1 discloses an iron-chromium-aluminum (Fe-Cr-Al) powder suitable for additive manufacturing.

### Citation List

### Patent Literature

Patent Literature 1: Chinese Patent Application Laid-Open Publication No. 110125383
Patent Literature 2: International Patent Application Publication No. WO2021-078885
Non-Patent Literature 1: MATER. RES. LETT. 2021, VOL. 9, NO. 8, 350-357

### SUMMARY OF INVENTION

### Technical Problem

In view of the above, the present invention aims to provide an Fe-Cr-Al-based alloy powder for additive manufacturing that improves high-temperature oxidation resistance, excels in ductility, and may suppress cracking, as well as an Fe-Cr-Al-based alloy member consisting of an additively manufactured article using this alloy powder and a method for producing the Fe-Cr-Al-based alloy member.

### Solution to Problem

The Fe-Cr-Al-based alloy powder of the present invention as defined in claim 1 includes, by mass%, 20% to 30% Cr, 2.0% to 7.0% Al, more than 0.15% but 0.75% or less Ti, and 0.001% to 0.010% C, where 70 ≦ (Ti/C) ≦ 300 is satisfied, with a remainder being Fe and unavoidable impurities, and is used for additive manufacturing.

The Fe-Cr-Al-based alloy member of the present invention as defined in claim 4, which is an additively manufactured article, includes, by mass%, 20% to 30% Cr, 2.0% to 7.0% Al, more than 0.15% but 0.75% or less Ti, and 0.001% to 0.010% C, where 70 ≦ (Ti/C) ≦ 300 is satisfied, with a remainder being Fe and unavoidable impurities. Carbides precipitating at grain boundaries of crystal grains are Ti carbides with an average diameter of 100 nm or less in equivalent circle diameter.

The method for producing the Fe-Cr-Al-based alloy member of the present invention as defined in claim 9 includes: using an Fe-Cr-Al-based alloy powder that includes, by mass%, 20% to 30% Cr, 2.0% to 7.0% Al, more than 0.15% but 0.75% or less Ti, and 0.001% to 0.010% C, where 70 ≦ (Ti/C) ≦ 300 is satisfied, with a remainder being Fe and unavoidable impurities, and performing additive manufacturing by irradiating the Fe-Cr-Al-based alloy powder with a laser beam or an electron beam for melting and solidification, where a heat source energy density J is set within a range of 20 to 120 J/mm³, as defined by the following equation (1): $J = P / \left(v\times a\times t\right)$ (1) where J is the heat source energy density (J/mm³), P is a power of the laser beam or electron beam (W), v is a scanning speed (mm/s), a is a scanning pitch (mm), and t is a layer thickness (mm).

### Effects of Invention

According to the present invention, it is possible to provide an Fe-Cr-Al-based alloy powder for additive manufacturing that improves high-temperature oxidation resistance, excels in ductility, and may suppress cracking, as well as an Fe-Cr-Al-based alloy member consisting of an additively manufactured article using this alloy powder, and a method for producing this Fe-Cr-Al-based alloy member.

### BRIEF DESCRIPTION OF DRAWINGS

FIG. 1 is an inverse pole figure (IPF) map obtained by electron back-scatter diffraction (EBSD) for the additively manufactured article of the example.
FIG. 2 (a) is an image observed by scanning transmission electron microscopy (STEM) for the additively manufactured article of the example, (b) is an enlarged image of the black frame region in (a), (c) and (d) are composition maps of Cr and Ti, respectively, observed by energy-dispersive X-ray spectroscopy (EDS) of (b).
FIG. 3 is an IPF map obtained by EBSD for the additively manufactured article of the comparative example.
FIG. 4 (a) is an image observed by STEM for the additively manufactured article of the comparative example, (b) is an enlarged image of the black frame region in (a), and (c) and (d) are composition maps of Cr and Ti, respectively, observed by EDS of (b).
FIG. 5 are diagrams illustrating examples of crack occurrence in the additively manufactured article of the comparative example, where (a) is an example of solid-state cracking originating from the edge portion, and (b) is an example of cracking originating from the cut surface.
FIG. 6 is a diagram illustrating the high-temperature oxidation test results of the additively manufactured articles according to the example and comparative example of the present invention.
FIG. 7 is a diagram illustrating an example of an additive manufacturing apparatus and an additive manufacturing method using the powder bed fusion (PBF) method.
FIG. 8 are diagrams illustrating examples of support members, each showing (a) a solid support, (b) a grid support, and (c) a cone support.

### DESCRIPTION OF EMBODIMENTS

The following describes the Fe-Cr-Al-based alloy powder for additive manufacturing, the Fe-Cr-Al-based alloy member consisting of an additively manufactured article, and the method for producing the Fe-Cr-Al-based alloy member of the present invention with reference to the drawings. First, the composition and particle size distribution of the alloy powder are described, followed by a description of the additive manufacturing method, the additively manufactured article, and its structure. It is noted that in this specification, the % indicating the content of metal elements refers to mass%. Further, a numerical range expressed using "to" includes the values before and after "to" as the lower limit value and upper limit value, respectively. The upper limit value and the lower limit value may be combined arbitrarily.

### [Alloy powder composition]

The Fe-Cr-Al-based alloy powder for additive manufacturing in this embodiment may improve high-temperature oxidation resistance and ductility, and excels in additive manufacturability. Specifically, the Fe-Cr-Al-based alloy powder of the present invention consists of, in mass%, 20% to 30% Cr, 2.0% to 7.0% Al, more than 0.15% but 0.75% or less Ti, 0.001% to 0.010% C, and satisfies 70 ≦(Ti/C)≦300, with the remainder being Fe and unavoidable impurities. The above alloy composition is an Fe-based alloy with Fe having the highest content in mass%, followed by Cr and Al contents, and consists of Cr, Al, and Fe as main constituent elements, including Ti and C in appropriate amounts and balance. Further, while Si, Mn, Ni, Zr, B, S, P, O, N, etc. are tolerated as unavoidable impurities, the contents of Si and Mn are particularly limited.

The following describes the details of the chemical components and contents of the Fe-Cr-Al-based alloy powder. The description of the chemical components and contents of the additively manufactured article is omitted as they are the same as those of the alloy powder.

### (Cr: 20% to 30%)

Cr is an effective element for improving high-temperature oxidation resistance by stabilizing the alumina film formed on the surface of the additively manufactured article. To ensure sufficient high-temperature oxidation resistance, the lower limit of Cr content is 20%. On the other hand, the upper limit of Cr content is 30% because excessive Cr content inhibits the formation of the alumina film. Further, Cr combines with C (carbon) to form Cr carbides such as Cr₇C₃, which increases hardness, and if these segregate at crystal grains or grain boundaries, it is undesirable as it may cause grain boundary cracks. Thus, the Cr content is set to 20% to 30%. The lower limit of Cr content is preferably 23%, more preferably 24%, from the perspective of improving high-temperature oxidation resistance. The upper limit of Cr content is preferably 27%, more preferably 26%, from the perspective of stabilizing the alumina film, preventing a decrease in elongation, and avoiding grain boundary cracks.

### (Al: 2.0% to 7.0%)

Al functions to form an alumina film on the surface of the additively manufactured article, improving high-temperature oxidation resistance and reducing the occurrence of oxide scales. To ensure sufficient high-temperature oxidation resistance, the lower limit of Al content is 2.0%. On the other hand, the upper limit of Al content is 7.0% because excessive Al content makes it more susceptible to solid-state cracking due to the ductile-brittle transition (DBT) caused by high thermal stress from rapid cooling rates in the melting and solidification process. Thus, the Al content is set to 2.0% to 7.0%. The lower limit of Al content is preferably 3.0%, more preferably 4.0%, from the perspective of forming a sound alumina film. Further, the upper limit of Al content is preferably 6.0%, more preferably 5.5%, from the perspective of avoiding solid-state cracking due to DBT.

### (Ti: more than 0.15% but 0.75% or less)

Ti may combine with carbon (C) to form Ti carbides such as TiC, thereby suppressing the precipitation of Cr carbides. This reduces precipitation hardening caused by Cr carbides, resulting in an effect of improving the high-temperature oxidation resistance and ductility of the additively manufactured article. To suppress the precipitation of Cr carbides, the lower limit of Ti content is set to more than 0.15%. On the other hand, the upper limit of Ti content is set to 0.75% because excessive Ti content decreases high-temperature oxidation resistance. Thus, the Ti content is set to more than 0.15% but 0.75% or less. The lower limit of Ti content is preferably 0.25%, more preferably 0.3%, from the perspective of generating Ti carbides and suppressing the segregation of Cr carbides. Further, the upper limit of Ti content is preferably 0.5%, more preferably 0.4%, from the perspective of preventing a decrease in high-temperature oxidation resistance.

### (C: 0.001% to 0.010%)

C generally has the effect of improving strength and hardness through the precipitation of Cr carbides. However, excessive addition forms Cr carbides near crystal grain boundaries, leading to deterioration in corrosion resistance. Further, it also increases the ductile-brittle transition temperature (DBTT), raising the risk of solid-state cracking. However, C may also be used as a deoxidizer in the melting process, and it is difficult to manufacture without adding any. For these reasons, in this embodiment, the C content is particularly restricted, with its lower limit set to 0.001%. As the C content increases, hardness rises, reducing crack resistance, or Cr carbides form at grain boundaries, making grain boundary cracks more likely, so the upper limit of C content is set to 0.010%. Thus, the C content is set to 0.001% to 0.010%. The lower limit of C content is preferably 0.0015%, more preferably 0.002%, from the perspective of appropriate Ti carbide formation and Cr carbide suppression, as well as manufacturing considerations. Further, the upper limit of C content is preferably 0.005%, from the perspective of ensuring crack resistance.

### (70 ≦ (Ti/C) ≦ 300)

Ti easily combines with carbon (C), and has the effect of preventing the precipitation of Cr carbides by forming Ti carbides. To manifest this effect, the ratio of Ti content to C content is important in this embodiment. Specifically, to precipitate the minimum necessary Ti carbides while preventing the precipitation of Cr carbides, the ratio of Ti content to C content (Ti/C) needs to be 70 or more. Thus, Ti/C is set to 70 or more. However, if Ti/C is too large, the amount of Ti dissolved in the ferrite phase (matrix phase) increases, raising hardness and making the material more prone to cracking. Thus, the upper limit is set to 300. Consequently, Ti/C is set to 70 to 300. The lower limit of Ti/C is preferably 100 or more, from the perspective of forming Ti carbides by combining with C dissolved in the ferrite phase within crystal grains, thereby lowering the hardness of the ferrite phase and preventing the precipitation of Cr carbides. The upper limit of Ti/C is preferably 250 or less, more preferably 200 or less, from the perspective of hardness and cracking.

In this embodiment, to eliminate solid-state cracking in Fe-Cr-Al-based alloys, the C content in the alloy composition is extremely limited, and the composition balance of Ti/C is set to an appropriate value. By adopting such an alloy composition, Cr and Ti are dispersed and precipitated in the ferrite phase (matrix phase) while minimizing the formation of carbides as much as possible. Even if carbides are formed, the composition is restricted so that Ti carbides preferentially precipitate, preventing the precipitation or segregation of Cr carbides. Furthermore, even if carbides precipitate within grain boundaries, they are limited to small amounts of fine Ti carbides rather than Cr carbides. Through these effects, cracks (including solid-state cracking, grain boundary cracks, etc.) in the additively manufactured article is suppressed, and it is considered that high-temperature oxidation resistance and ductility are improved.

### (Fe: remainder)

In the alloy of this aspect, Fe constitutes the remainder of the alloy composition defined above.

### (Unavoidable impurities)

Unavoidable impurities include Si, Mn, Ni, Zr, B, S, P, O, and N. It is preferable that the content of these unavoidable impurities is as low as possible, with 0% being ideal. In this aspect, it is preferable to limit the content of Si, Mn, Ni, Zr, B, S, P, O, and N as follows.

### (Si: 0.3% or less)

As the Si content increases, the alloy becomes harder, making it more susceptible to cracks during additive manufacturing. Thus, the Si content is limited to 0.3% or less. Preferably, it is 0.1% or less, more preferably 0.01% or less, and even more preferably 0.005% or less.

### (Mn: 0.3% or less)

As the Mn content increases, the high-temperature oxidation resistance decreases, so the Mn content is limited to 0.3% or less. Preferably, it is 0.1% or less, more preferably 0.01% or less, and even more preferably 0.005% or less.

### (Ni: 0.3% or less)

As the Ni content increases, cracking becomes more likely to occur during the solidification stage in additive manufacturing, so the Ni content is limited to 0.3% or less. Preferably, it is 0.1% or less, more preferably 0.01% or less, and even more preferably 0.005% or less.

### (Zr: 0.1% or less)

As the Zr content increases, it combines with carbon (C) to form Zr carbides, which segregate to the grain boundaries, making it more susceptible to cracks from the grain boundaries. Thus, the Zr content is limited to 0.1% or less. Preferably, it is 0.05% or less, more preferably 0.02% or less, and even more preferably 0.01% or less.

### (B: 0.01% or less)

As the B content increases, TiB₂, Fe₂B, and Cr₂B are formed near the grain boundaries, making it more susceptible to cracks. Thus, the B content is limited to 0.01%. Preferably, it is 0.005% or less, more preferably 0.003% or less, and even more preferably 0.002% or less.

### (S, P: 0.01% or less)

Since S and P segregate to the grain boundaries and cause high-temperature cracking, the content of S and P is limited to 0.01% or less. Preferably, it is 0.005% or less, and more preferably 0.002% or less.

### (O: 0.04% or less)

O (oxygen) combines with Al, Ti, and other elements to form oxides inside and on the surface of the alloy powder. While these oxides have the effect of improving strength, they may also act as fracture initiation points and potentially reduce toughness. Thus, the O content is limited to 0.04% or less. Preferably, it is 0.03% or less, and more preferably 0.02% or less.

### (N: 0.001% or less)

N (nitrogen) is unavoidably introduced during the manufacturing process of powder for additive manufacturing, such as the gas atomizing method, and a content of about 0.001% may be tolerated.

The component composition of the Fe-Cr-Al-based alloy powder in this embodiment is determined by the following measurement method. As described in the examples below, the powder for additive manufacturing after classification is dissolved in an appropriate aqueous solution, and this aqueous solution is analyzed by inductively coupled plasma (ICP) analysis to measure the content of specified components. It is noted that for C, N, and O, their content is determined by gas analysis using the combustion method.

### [Method for producing alloy powder]

As a method for producing the Fe-Cr-Al-based alloy powder in this embodiment, atomization methods such as gas atomizing method, water atomizing method, and jet atomizing method may be used. Among these, it is preferable to produce the powder using the gas atomizing method, which easily yields spherical powder. In the atomizing method, after melting raw material powder blended to achieve the specified composition in a crucible, the molten metal is discharged from the bottom of the crucible while high-pressure gas is sprayed onto the discharged molten metal. By solidifying the metal melt that has been dispersed into droplets by the kinetic energy of the high-pressure sprayed medium, spherical Fe-Cr-Al-based alloy powder may be produced. Further, to prevent the contamination of Zr impurities, it is preferable that the crucible used in this process is made of Al₂O₃.

### (Particle size distribution)

The Fe-Cr-Al-based alloy powder in this embodiment is an alloy powder for additive manufacturing suitable for additive manufacturing methods. The particle size distribution is determined by laser diffraction method using a laser diffraction particle size distribution analyzer. For example, as an alloy powder suitable for SLM described below, in the cumulative distribution curve showing the relationship between particle diameter and cumulative volume from the small particle diameter side, the particle diameter D10 corresponding to the cumulative value of 10 volume% is 7 µm to 35 µm, preferably 10 µm to 25 µm. The particle diameter D50 corresponding to the cumulative value of 50 volume% is 10 µm to 60 µm, preferably 20 µm to 40 µm. Further, the particle diameter D90 corresponding to the cumulative value of 90 volume% is 20 µm to 100 µm, preferably 40 µm to 80 µm. Particles that are too small may cause the powder bed to wear or become biased, resulting in poor coating properties. On the other hand, particles that are too large may raise concerns about insufficient melting due to lack of laser power, potentially affecting defects and surface roughness. By having the above particle size distribution, or even by satisfying just the D50 value, the powder bed may be repeatedly laid out in a flat and uniform thickness.

Further, for a suitable particle size distribution of the Fe-Cr-Al-based alloy powder in this embodiment when used for LMD as described below, the particle diameter D10 corresponding to the cumulative value of 10 volume% is 15 µm to 100 µm, preferably 20 µm to 80 µm. The particle diameter D50 corresponding to the cumulative value of 50 volume% is 30 µm to 250 µm, preferably 60 µm to 200 µm. The particle diameter D90 corresponding to the cumulative value of 90 volume% is 50 µm to 500 µm, preferably 100 µm to 300 µm. In the case of LMD, if the grain size becomes too small, bias occurs in the flow of powder during transport, making it difficult to supply powder stably to the molten pool. Also, due to the biased flow of powder, clogging may occur in the discharge head as the powder becomes unevenly distributed. On the other hand, if the grain size becomes too large, there are concerns about insufficient melting due to lack of laser power, potentially affecting defects and surface roughness.

### [Method for producing additively manufactured article]

The Fe-Cr-Al-based alloy powder of this embodiment is suitable for additive manufacturing methods. Generally, additive manufacturing methods for metal materials are broadly classified into powder bed fusion (PBF) and directed energy deposition (DED) methods. The PBF method involves forming a powder bed by spreading alloy powder on a substrate, and then irradiating a beam onto the alloy powder spread in the target area to melt and solidify the alloy powder for manufacturing. On the other hand, the DED method, also known as the laser metal deposition (LMD) method, involves supplying alloy powder and irradiating a heat source beam towards the substrate or an already shaped object, melting and solidifying the alloy powder supplied to the manufacturing area for manufacturing. The additively manufactured article of this embodiment may be manufactured by either method.

Both PBF and DED methods have variations that use either a laser beam or an electron beam as the heat source. For example, methods using a laser beam are broadly classified into powder selective laser melting (SLM) and powder selective laser sintering (SLS). In SLM and SLS, which use a laser beam as the heat source, additive manufacturing is performed under an inert atmosphere such as nitrogen gas. On the other hand, the method using an electron beam is called selective electron beam melting (SEBM or EBM). In methods using an electron beam as the heat source, additive manufacturing is performed under high vacuum conditions.

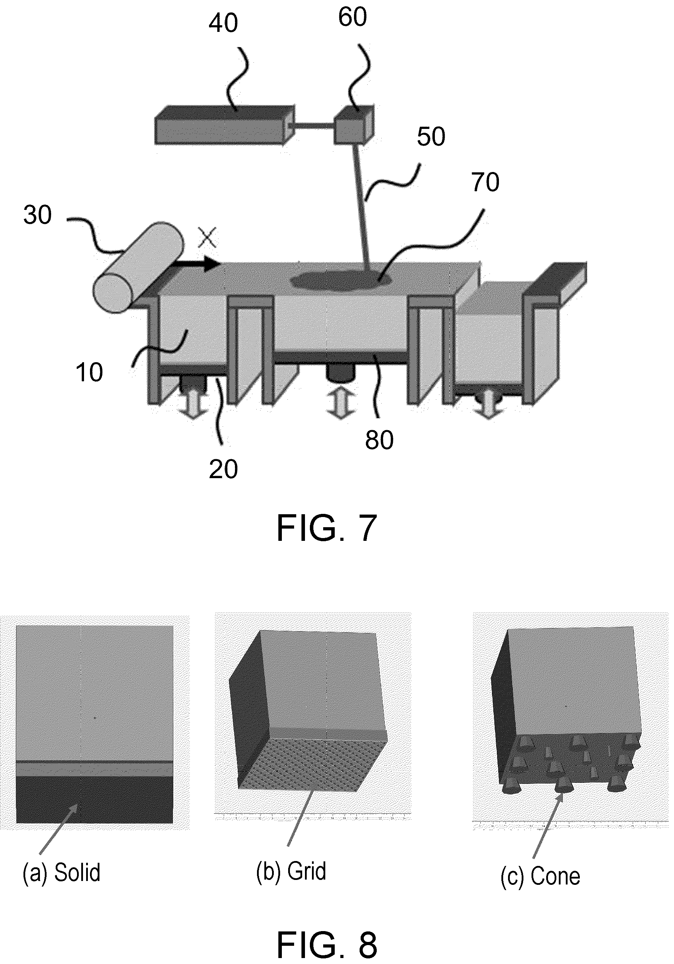

FIG. 7 illustrates a schematic configuration of a laser additive manufacturing method for additive manufacturing using a laser beam as the heat source among PBF methods. As shown in FIG. 7, 10 is the alloy powder as the raw material, 20 is a powder supply stage, 30 is a recoater, 40 is a laser oscillator, 50 is laser light, 60 is a galvano scanner, 70 is an additively manufactured article, and 80 is a manufacturing stage.

The additive manufacturing process involves raising the powder supply stage 20 by a predetermined distance and lowering the manufacturing stage 80 by a predetermined distance, then moving the recoater 30 in the X direction to supply the alloy powder 10 onto the manufacturing stage 80, forming a powder bed. The laser light 50 from the laser oscillator 40 is controlled by the galvano scanner 60 and irradiated at predetermined positions on the powder bed, selectively melting and solidifying the powder to form a solidified layer. By repeating this process, a three-dimensional additively manufactured article 70 is manufactured.

Next, in relation to the method for producing the Fe-Cr-Al-based alloy member of this embodiment, it is described how the improvement in manufacturing conditions led to the reduction of solid-state cracking, and how the improvement in support addition during manufacturing resulted in the reduction of cracking when cutting out the manufactured article.

### (Manufacturing conditions)

Generally, increasing the heat source energy density of the laser beam or electron beam results in higher molten pool temperatures, leading to greater thermal stress and residual strain. Conversely, if the heat source energy density is too low, it becomes impossible to completely melt the alloy powder, resulting in a low-density additively manufactured article with defects. Fe-Cr-Al-based alloys have a ductile-brittle transition (DBT) in the low-temperature range, so high thermal stress due to rapid cooling rates makes them prone to solid-state cracking (SSC) caused by DBT. Further, as crystal grains grow larger, the DBT temperature (DBTT) increases, further increasing the risk of SSC. Here, the heat source energy density J is defined as the following equation (1). $J = P / \left(v\times a\times t\right)$ (1), where J is the heat source energy density (J/mm³), P is a power of the laser beam or electron beam (W), v is a scanning speed (mm/s), a is a scanning pitch (mm), and t is a layer thickness (mm).

The heat source energy density J (hereinafter referred to as energy density) may be controlled by changing the laser or electron beam power P, scanning speed v, scanning pitch a, and layer thickness t. Among the manufacturing parameters to be controlled, the relationship between the laser or electron beam power P, scanning speed v, and scanning pitch a is significant, and it is preferable to control the energy density by adjusting these three parameters. In this embodiment, the relationship between the occurrence of cracks and the changes in laser power P and scanning speed v is examined. It is noted that the term "crack" used hereafter includes both solid-state cracking and cracking.

As a result, in this embodiment, by selecting manufacturing conditions that match the composition of the Fe-Cr-Al-based alloy powder, the DBT temperature may be reduced. That is, according to the Fe-Cr-Al-based alloy powder of this embodiment, it became possible to select a low energy density within an appropriate range, and the energy densityis according to the invention 20 to 120 J/mm³. The preferable energy density is 40 to 100 J/mm³, and more preferably 50 to 90 J/mm³.

By being able to manufacture with such low energy density, the thermal load on the molten pool is reduced, allowing for the formation of an additively manufactured article with relatively small-diameter, uniform columnar crystal grains. As a result, the thermal stress is reduced, and the DBT temperature may be lowered to near room temperature or below. By reducing the DBT temperature, it is considered that the risk of solid-state cracking may be reduced.

### (Support addition)

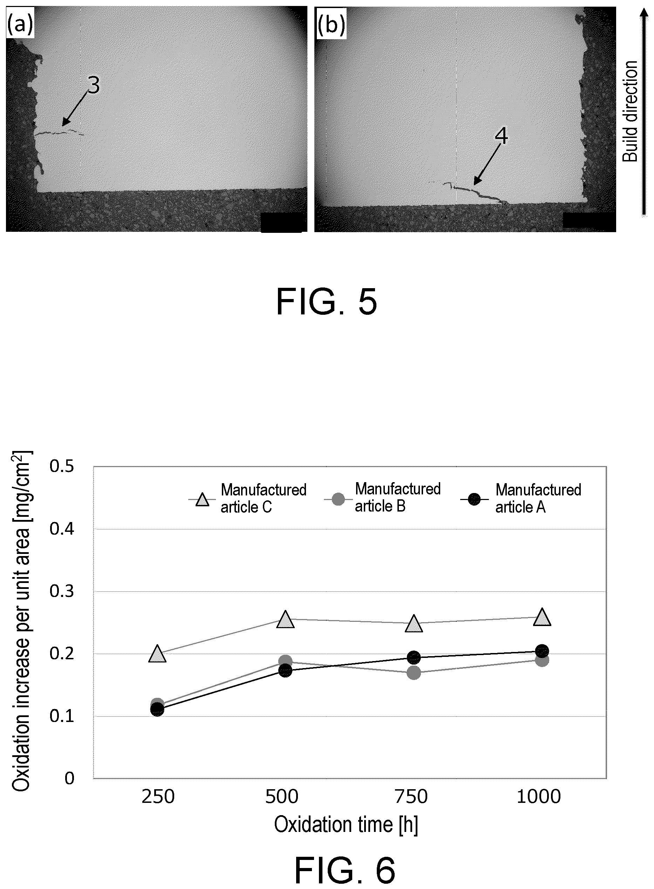

In additive manufacturing, the manufactured article is manufactured on a base plate, and residual stress and strain caused by thermal stress generated during the manufacturing process accumulate therebetween. After the manufacturing process is completed, when cutting out the additively manufactured article from the base plate, stress may be rapidly relieved at the cut surface of the additively manufactured article, potentially causing cracking different from solid-state cracking (refer to FIG. 5(b)). Thus, to reduce the risk of cracking, it is effective to interpose a support member between the base plate and the additively manufactured article. By adding a support member, the accumulation of residual stress and strain in the manufacturing process may be mitigated, preventing the occurrence of cracking. There are no particular limitations on the shape or type of support, and solid supports, cone supports, grid supports, and others may be used. Further, the preferable range for the height of the support member is 0.5 mm or more and 5 mm or less. In the case where the height of the support is less than 0.5 mm, the effect of mitigating residual stress and strain is low. On the other hand, in the case where the height of the support exceeds 5 mm, the manufacturing time may increase, potentially leading to increased manufacturing costs.

By interposing the above-mentioned support member, even if the input energy from the heat source increases, it becomes possible to reduce thermal stress and residual strain caused by rapid cooling, thereby reducing the risk of cracking when separating the additively manufactured article. It is noted that the addition of supports is optional and not a mandatory process.

### [Structure]

The additively manufactured article according to this embodiment, compared to additively manufactured articles made from commercially available alloy powder compositions, shows suppressed solid-state cracking and improved high-temperature oxidation resistance and ductility of the additively manufactured article, as demonstrated in the examples described later. These additively manufactured articles with improved properties first have relatively small and approximately uniform crystal grains. Furthermore, it was found that Cr or Ti carbides do not precipitate in the ferrite matrix phase, and in the case where carbides precipitate at grain boundaries, only a small amount of fine titanium carbides precipitate. Details are described below.

The mechanism for suppressing solid-state cracking in the additively manufactured article is described.

### (Melting and solidification structure)

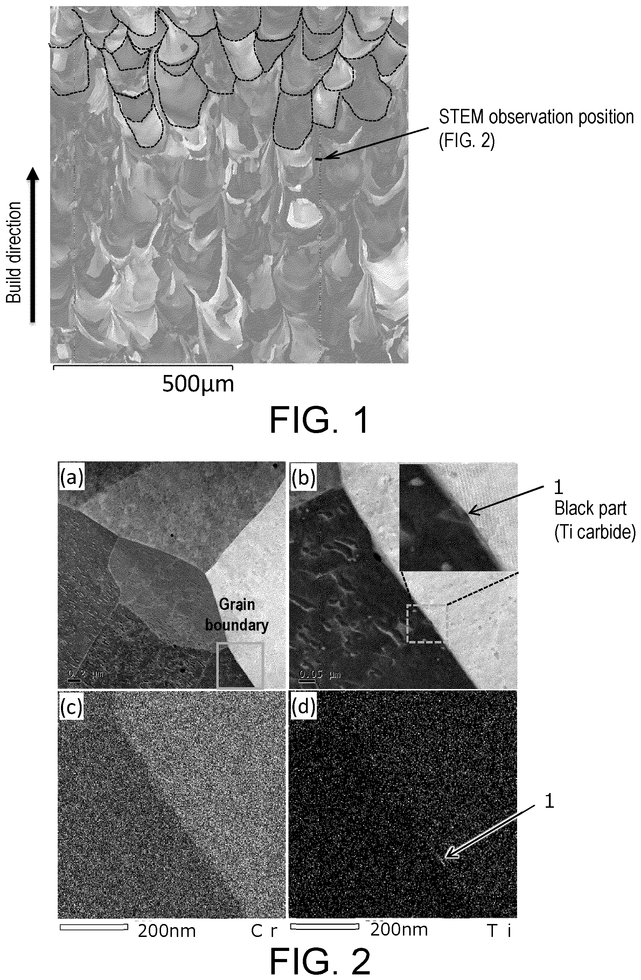

First, in this embodiment, the carbon (C) content is limited to an extremely low amount, and the composition balance of Ti/C is set to an appropriate value. Using this alloy powder, additive manufacturing may be performed under manufacturing conditions with relatively low energy density. In the manufacturing process, due to the extremely high melting and solidification rates, and the repeated lamination of rapidly solidified layers, columnar structures are formed in an equiaxed direction, stacking on top of each other. FIG. 1 is an inverse pole figure (IPF) map obtained by electron back-scatter diffraction (EBSD) for the additively manufactured article according to this embodiment. Numerous columnar crystal grains extended in the build direction are formed in the structure of the manufactured article. Each columnar crystal is formed in a relatively small, substantially circular or scale-like shape, and the average grain diameter was 57 µm in equivalent circle diameter. The average grain diameter is preferably 100 µm or less, more preferably 80 µm or less, and even more preferably 60 µm or less. It is considered that such a fine, substantially circular, and uniform crystal structure contributes to reducing the DBTT and suppressing the occurrence of solid-state cracking. It is noted that the average grain diameter is the area-weighted average grain diameter per 100 crystals.

### (Crystal structure)

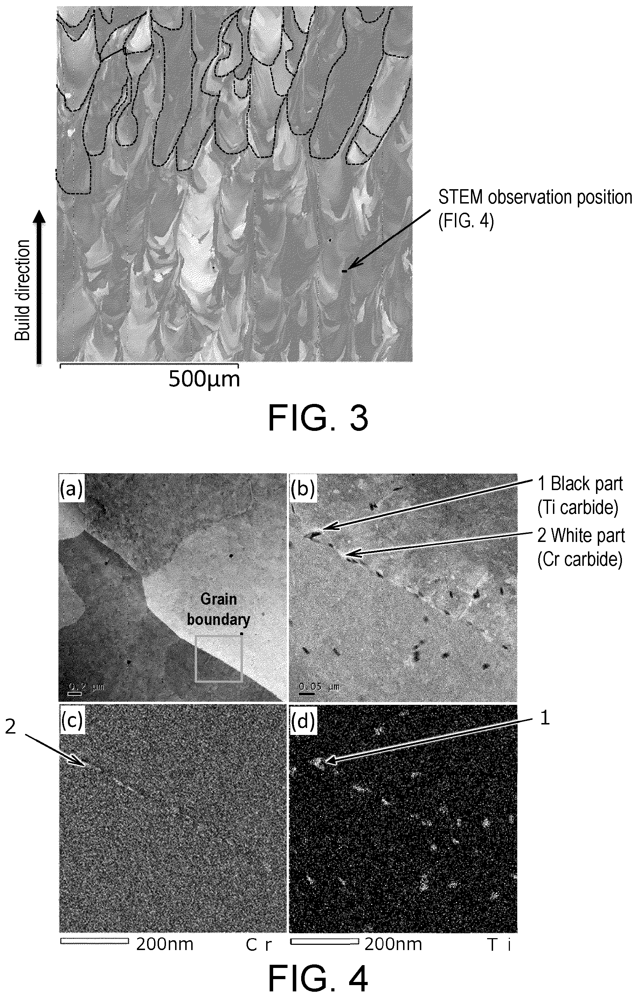

Next, the microstructure was observed using a scanning transmission electron microscope (STEM). In Fe-Cr-Al-based alloys, C in the alloy composition tends to combine with Cr and Ti to form their respective carbides. For example, in the comparative example shown in FIG. 4(b) described later, numerous Cr carbides and Ti carbides are dispersed and precipitated along the grain boundaries. On the other hand, in the example shown in FIG. 2(b), only a small amount of fine Ti carbides are precipitated at the grain boundaries, and no Cr carbides were present. This is because by limiting the C content in the alloy composition to an extremely low amount, the precipitation of carbides in the ferrite phase (matrix phase) may be suppressed. Furthermore, by setting the composition balance of Ti/C to an appropriate value, Ti, which has a higher affinity than Cr, suppresses the formation of Cr carbides, thereby preventing the precipitation of carbides at the grain boundaries. Even if precipitation occurs at the grain boundaries, it is limited to fine and small amounts of Ti carbides. The size of these Ti carbides has an average diameter of 100 nm or less in equivalent circle diameter. Preferably, it is 80 nm or less, and more preferably 50 nm or less. Further, the number density of Ti carbides is 50 or less per 1 µm². Preferably, it is 30 or less, and more preferably 10 or less.

As described above, it is considered that the suppression of solid-state cracking and improvement in high-temperature oxidation resistance were achieved due to the absence of segregation of TiC and CrC carbides in the matrix phase, uniform dispersion of the composition, and limited precipitation of carbides at the grain boundaries. Furthermore, it is considered that the ability to suppress the precipitation of Cr carbides at the grain boundaries led to a relative decrease in the hardness of the additively manufactured article, resulting in improved ductility.

### [High-temperature oxidation resistance]

The additively manufactured article of this embodiment excels in high-temperature oxidation resistance. In a high-temperature oxidation test conducted in an atmospheric furnace at 900°C for more than 0 hours up to 1000 hours, the oxidation amount per unit area, defined as [mass loss before and after oxidation test]/[surface area before oxidation test], showed excellent high-temperature oxidation resistance of 0.25 mg/cm² or less even after 1000 hours, as illustrated in FIG. 6 described later. Further, the oxidation amount per unit area may be maintained at 0.2 mg/cm² or less from 500 to 1000 hours. Furthermore, for 250 hours, the oxidation amount per unit area is 0.12 mg/cm² or less.

### [Mechanical properties]

Examples of indicators of mechanical properties include yield strength, tensile strength, elongation, reduction of area, and Vickers hardness (HV). It is note that yield strength and tensile strength are indicators for assessing strength, while elongation and reduction of area are indicators for assessing ductility. Vickers hardness (HV) is, as the term implies, an indicator for assessing hardness.

The yield strength of the additively manufactured article according to this embodiment may be 610 MPa or more, preferably 650 MPa or more, and more preferably 730 MPa or more. Regarding tensile strength, it may exhibit values of 710 MPa or more, preferably 800 MPa or more, and more preferably 810 MPa or more.

Moreover, the elongation of the additively manufactured article according to this embodiment may exhibit values of 30% or more, preferably 35% or more, and more preferably 38% or more. Regarding the reduction of area, it may exhibit values of 60% or more, preferably 70% or more, and more preferably 80% or more.

Furthermore, the Vickers hardness (HV10) of the additively manufactured article according to this embodiment exhibits 210 HV or more, but the hardness may be suppressed from the perspective of DBT. Further, if the hardness is too high, machinability becomes poor, and cracks due to processing are more likely to occur, so the upper limit of hardness is about 300 HV. The preferable hardness range is 230 to 280 HV, and more preferably 240 to 270 HV.

### [Applications]

The additively manufactured article of this embodiment exhibits excellent high-temperature oxidation resistance, particularly at temperatures of 800°C or higher, and the surface oxide film does not grow even when used in high-temperature environments. Thus, it may be applied to members and parts installed inside oxidation furnaces for semiconductor manufacturing or sintering furnaces for electronic parts manufacturing. Further, it may provide additively manufactured articles with complex shapes and excellent high-temperature oxidation resistance in a wide range of fields, including parts for the aerospace and automotive industries, equipment for chemical plants and pharmaceutical manufacturing, and in the energy sector such as oil and gas. Furthermore, it may also be applied as heating wires or electrical resistors in household appliances. Examples

The present invention is described in detail below based on examples.

### (Alloy powder for additive manufacturing)

Alloy powders a, b, and c for additive manufacturing with the chemical compositions shown in Table 1 were prepared. Alloy powders a and b are examples, while alloy powder c is a comparative example. These alloy powders (hereinafter referred to as powders) were prepared by preparing raw materials for melting, melting them using a conventional high-frequency vacuum melting furnace to create a master alloy, and then producing the powders by gas atomizing method in an argon atmosphere. It is noted that the atomized powder was classified to obtain powder with a grain diameter of 10 to 60 µm for use in additive manufacturing. The D10, D50, and D90 of the classified powder are also shown in Table 1.

Comparing the component compositions of powders a and b (examples) with powder c (comparative example) shown in Table 1, powders a and b have significantly reduced C content compared to powder c, and moreover, the ratio of Ti content to C content (Ti/C) for powders a and b is set to 70 or higher compared to powder c. Further, for powders a and b, the content of impurities Si and Mn is significantly reduced.

**[Table 1]**

| Alloy powder | | Component composition [mass%] | | | | | | Grain size [µm] | | |
|---|---|---|---|---|---|---|---|---|---|---|
| | | Fe | Cr | Al | Ti | C | Ti/C | D10 | D50 | D90 |
| Example | a | Bal. | 24.39 | 5.05 | 0.24 | 0.0024 | 100 | 18.9 | 32.2 | 53.4 |
| | b | Bal. | 26.02 | 4.98 | 0.23 | 0.003 | 76.6 | 18.8 | 32.5 | 54.2 |
| Comparative Example | c | Bal. | 25.67 | 4.97 | 0.25 | 0.03 | 8.3 | 17.2 | 30.1 | 50.8 |
| | | Other impurities [mass%] | | | | | | | | |
| | | Ni | Si | Mn | O | N | S | P | Zr | B |
| Example | a | <0.01 | 0.01 | <0.01 | 0.0121 | 0.0003 | 0.0008 | 0.001 | 0.01 | 0.0016 |
| | b | <0.01 | 0.004 | <0.01 | 0.0144 | 0.0002 | 0.0009 | 0.001 | 0.005 | 0.0002 |
| Comparative Example | c | 0.1 | 0.46 | 0.49 | 0.015 | 0.03 | - | - | <0.005 | - |

| | | | | | | | | | | |
|---|---|---|---|---|---|---|---|---|---|---|
| Note: In the table, "-" indicates not measured | | | | | | | | | | |

(Manufacturing of alloy member)

Next, additively manufactured article were manufactured by additive manufacturing method using the above-mentioned powders.

Using an additive manufacturing apparatus (EOS M290: manufactured by EOS), additively manufactured articles (10mm×10mm×10mm) were manufactured by performing additive manufacturing using SLM method under the following conditions (hereinafter, the additively manufactured articles may be referred to as the manufactured articles). The manufactured articles additively manufactured using powders a, b, and c are referred to as manufactured articles A, B, and C, respectively.

In this example, the manufacturing conditions were set with a scanning pitch of 0.11 mm and a laminated layer thickness of 0.04 mm, the laser power was set in the range of 200 W to 350 W, and the scanning speed was operated in the range of 700 mm/sec to 1500 mm/sec. As a result, various manufactured articles could be manufactured with an energy density J in the range of 30 to 114 J/mm³.

Further, manufactured articles A, B, and C used for the crack observation, structure observation, high-temperature oxidation resistance, and mechanical properties evaluation described below were manufactured with a laser power of 325 W, a scanning speed of 800 mm/sec, a scanning pitch of 0.11 mm, a laminated layer thickness of 0.04 mm, and an energy density of 92 J/mm³.

### (Support addition)

To reduce the residual stress generated between the base plate and the additively manufactured article, block materials (10mm×10mm×10mm) were manufactured by placing support members with a height of 1 mm between the base plate and the additively manufactured article. As support members, (a) a solid support, (b) a grid support, (c) a cone support, and square-shaped (not shown) supports as illustrated in FIG. 8 were used. After manufacturing, the manufactured article was separated from the support members using a wire electrical discharge machine.

The following evaluations were performed: crack observation, structure observation, high-temperature oxidation resistance, and mechanical properties.

### (Crack evaluation)

The cross-sections of each manufactured article (10mm×10mm×10mm) were cut and embedded in resin using a vacuum apparatus for hot resin filling (CitoPress-30: manufactured by Struers). The manufactured article embedded in the resin was polished to #1500 with water-resistant emery paper, and then polished with diamond paste in the order of grain diameter from 1 µm to 0.3 µm, giving it a mirror finish, to obtain a test piece for measuring cracks and defect rates. The crack confirmation method involved visual inspection for crack occurrence and measurement of defect rates using a microscope (VHX-6000: manufactured by Keyence).

Table 2-1 illustrates the crack occurrence status when using powders a, b, and c, with a fixed scanning pitch of 0.11 mm and a layer thickness of 0.04 mm, while varying the scanning speed from 700 to 1500 mm/s in response to laser power ranging from 200 to 350 W. It is noted that as shown in Table 2-2, the energy density according to the above manufacturing conditions varies in the range of 30 to 114 J/mm³.

**[Table 2-1]**

| Manufactured article | Power [W] | Scanning speed [mm/s] | | | | | | | Crack rate [%] |
|---|---|---|---|---|---|---|---|---|---|
| | | 700 | 800 | 875 | 1050 | 1225 | 1400 | 1500 | |
| A (Example) | 350 | No crack | No crack | No crack | No crack | No crack | No crack | No crack | 0 |
| | 300 | No crack | No crack | No crack | No crack | No crack | No crack | No crack | |
| | 250 | No crack | No crack | No crack | No crack | No crack | No crack | No crack | |
| | 200 | No crack | No crack | No crack | No crack | No crack | No crack | No crack | |
| B (Example) | 350 | Partially present | Partially present | No crack | No crack | No crack | No crack | No crack | 7 |
| | 300 | No crack | No crack | No crack | No crack | No crack | No crack | No crack | |
| | 250 | No crack | No crack | No crack | No crack | No crack | No crack | No crack | |
| | 200 | No crack | No crack | No crack | No crack | No crack | No crack | No crack | |
| C (Comparative Example) | 350 | Present | Present | Present | Present | Present | Present | Present | 96.4 |
| | 300 | Present | Present | Present | Present | Present | Present | Present | |
| | 250 | Present | Present | Present | Present | Present | Present | Present | |
| | 200 | Present | Present | Present | Present | Present | Present | No crack | |

| | | | | | | | | | |
|---|---|---|---|---|---|---|---|---|---|
| Note: "Present" indicates solid-state cracking, "partially present" indicates cracking, and "No crack" indicates neither solid-state cracking nor cracking. | | | | | | | | | |

**[Table 2-2]**

| Power [W] | Scanning speed [mm/s] | | | | | | |
|---|---|---|---|---|---|---|---|
| | 700 | 800 | 875 | 1050 | 1225 | 1400 | 1500 |
| 350 | 113.6 | 99.4 | 90.9 | 75.8 | 64.9 | 56.8 | 53 |
| 300 | 97.4 | 85.2 | 77.9 | 64.9 | 55.7 | 48.7 | 45.5 |
| 250 | 81.2 | 71 | 64.9 | 54.1 | 46.4 | 40.6 | 37.9 |
| 200 | 64.9 | 56.8 | 51.9 | 43.3 | 37.1 | 32.5 | 30.3 |

As can be seen from the results in Table 2-1, the manufactured article A manufactured using powder a did not develop cracks under any conditions. The manufactured article B manufactured using powder b did not exhibit solid-state cracking, but under some conditions with relatively high energy density, cracking extending from the cut surface to the interior, as shown in FIG. 5(b), were observed. Thus, the occurrence rate was 7%. In addition, the manufactured article C manufactured using powder c developed solid-state cracking extending horizontally from the edge portion to the interior, as shown in FIG. 5(a). It is noted that in the case of the manufactured article C, there were instances where solid-state cracking did not occur under low energy density conditions with low power and high scanning speed, but these structures had internal cavities and resulted in low-quality manufactured articles. Furthermore, although not shown in Table 2-1, there were also cases where cracking occurred.

From the above results, it was found that among the compositions of alloy powders, the occurrence of cracks in the manufactured article may be suppressed by reducing the C content, optimizing the Ti/C ratio, and reducing the Si and Mn contents. In addition, it can be said that the manufacturing conditions using this alloy powder may be carried out under relatively low energy density conditions, thereby reducing the risk of cracks such as solid-state cracking.

Furthermore, in the manufactured article B, under relatively high energy density conditions with a laser power of 350 W and scanning speeds of 700 mm/s (energy density of 99.4 J/mm³) and 800 mm/s (energy density of 113.6 J/mm³), cracking as shown in FIG. 5(b) occurred (indicated as "Partially present" in Table 2). Thus, when various supports with a height of 1 mm, as mentioned above, were added between the additively manufactured article and the base plate, the cracking in the manufactured article B disappeared. Table 3 illustrates the status of support addition and cracking occurrence.

**[Table 3]**

| Types of support | States of crack occurrence |
|---|---|
| Solid | No crack |
| Grid | No crack |
| Cone | No crack |
| Square-shaped | No crack |

It was demonstrated that regardless of the type of support, the addition of appropriate support members prevented the occurrence of cracks in the additively manufactured article. This is considered to be due to the support members mitigating the thermal stress and strain generated during the melting process of additive manufacturing, thereby preventing the occurrence of cracks.

### (Structure observation)

The microstructures of the manufactured article A and the manufactured article C were evaluated for crystal orientation using the electron back-scatter diffraction (EBSD) method (JSM-7900F: manufactured by JEOL). The results for the manufactured article A are shown in FIG. 1, and the results for the manufactured article C are shown in FIG. 3.

In the manufactured article A (example) of FIG. 1, as illustrated by some of the outlines, it consisted of fine columnar crystals that were substantially circular or scale-like in shape. The columnar crystal structure was formed by rapid solidification of small molten pools, and the columnar crystals grew overall in the build direction due to the heat flux of the manufactured article. The columnar crystal structure of the manufactured article A had a width of 2 to 150 µm and a length of 4.5 to 316 µm in the build direction, with an average grain diameter of 57 µm in equivalent circle diameter. The average grain diameter is the area-weighted average grain diameter per 100 crystals.

On the other hand, in the manufactured article C (comparative example) of FIG. 3, as illustrated by some of the outlines, it consisted of relatively coarse and elongated columnar crystals. The columnar crystal structure grew in the build direction similar to the manufactured article A, but it clearly grew larger, and the columnar crystal structure of the manufactured article C had a width of 2 to 182 µm and a length of 4.5 to 501 µm in the build direction, with many observed to exceed 500 µm in length.

Although the manufactured article A and the manufactured article C were manufactured under the same manufacturing conditions, there was a difference in the columnar crystal structure that occurred during melting and solidification, which is thought to be due to the difference in composition. According to the composition of the example, it can be said that even with low energy density, it is possible to suppress the growth of the structure due to melting and solidification, resulting in a columnar crystal structure of appropriate size.

Next, samples were obtained from the observation points shown in FIG. 1 and FIG. 3 for the same manufactured article A and manufactured article C, and the crystal structure of the thin pieces cut out by focused ion beam processing was observed using a scanning transmission electron microscope (STEM) (JEM-ARM200F: manufactured by JEOL). The results are shown in FIG. 2(a) for the manufactured article A and FIG. 4(a) for the manufactured article C. Furthermore, enlarged images of the grain boundaries in the black frame regions are shown in FIG. 2(b) and FIG. 4(b), respectively.

Next, elemental mapping of Cr and Ti was obtained by elemental analysis (EDS) in STEM for the enlarged images of the grain boundaries in FIG. 2(b) and FIG. 4(b). The results are shown in FIG. 2(c)(d) for the manufactured article A and FIG. 4(c)(d) for the manufactured article C.

First, observing FIG. 4 of the manufactured article C, in FIG. 4(b), numerous black particles and white particles can be seen dispersed and precipitated along the grain boundaries. Here, the black particles are Ti carbides (TiC), and the white particles are Cr carbides (CrC). The average diameter of the equivalent circle diameter per 10 TiC particles was 35 nm, with some exceeding 50 nm. Further, the number density of TiC was over 50 per 1 µm². On the other hand, for CrC, the average size was about 50 nm, and the number density was over 2 per 1 µm². Furthermore, as shown in the elemental mapping in FIG. 4(c)(d), it was confirmed that Cr and Ti precipitated in large numbers at the grain boundaries, and it was confirmed that TiC segregated in the ferrite phase (matrix phase), and CrC also appeared to be slightly segregated.

Next, observing FIG. 2 of the manufactured article A, in FIG. 2(b), only a few black particles, namely TiC, can be seen precipitated at the grain boundaries, while CrC could not be observed. Furthermore, the average diameter of the equivalent circle diameter of TiC was about 35 nm, with none exceeding 40 nm. Further, it can be said that the number density was less than 3 per 1 µm².

Moreover, in the elemental mapping of FIG. 2(c)(d), it was confirmed that Cr and Ti were not found at the grain boundaries. Furthermore, it was confirmed that Cr and Ti were evenly dispersed in the ferrite phase without any segregation. The carbide sizes and number densities of manufactured articles A, B, and C are shown in Table 4.

**[Table 4]**

| | Ti carbide | | Cr carbide | |
|---|---|---|---|---|
| | Maximum size [nm] | Number density [Pieces/1 µm²] | Maximum size [nm] | Number density [Pieces/1 µm²] |
| A (Example) | 40 | Less than 3 | 0 | 0 |
| B (Example) | 40 | Less than 3 | 0 | 0 |
| C (Comparative Example) | More than 50 | More than 50 | 50 | More than 2 |

From the above, in the manufactured article C, which has a high C content and a Ti/C composition balance exceeding the appropriate value, both Ti carbide and Cr carbide tend to precipitate and segregate easily. Simultaneously, as shown in FIG. 4(d), Ti carbide also segregates in large numbers in the ferrite phase outside the grain boundaries. On the other hand, in the manufactured article A, where the C content is limited to the minimum necessary and the Ti/C composition balance is at an appropriate value, the content of Ti and C, which easily bond with C, is limited and balanced. Thus, the minimum necessary TiC precipitates preferentially, limiting the formation of Cr carbide. As a result, it is considered that Ti and Cr are evenly dispersed and precipitated in the ferrite phase, and small amounts of fine TiC precipitate at the grain boundaries. The same can be said for the manufactured article B.

As described above, it is considered that the suppression of solid-state cracking and improvement in high-temperature oxidation resistance were achieved due to the absence of segregation of TiC and CrC carbides in the matrix phase, uniform dispersion of the composition, and limited precipitation of carbides at the grain boundaries. Furthermore, it is considered that the ability to suppress the precipitation of Cr carbides at the grain boundaries led to a relative decrease in the hardness of the additively manufactured article, which was reflected in the elongation and reduction of area, resulting in improved ductility.

### (High-temperature oxidation resistance)

For manufactured articles A, B, and C, plate samples were obtained and their surfaces were polished to #1000 with water-resistant emery paper. Then, they were degreased by holding them in acetone under ultrasonic vibration for 5 minutes to obtain oxidation test specimens. After measuring the dimensions and mass of each test specimen, they were held at 900°C using a small atmospheric furnace, with oxidation times set at four stages: 250 hours, 500 hours, 750 hours, and 1000 hours. Subsequently, they were cooled to room temperature, and the mass change of each specimen was measured at each stage. Then, for each test specimen, the oxidation amount per unit area (mg/cm²) was calculated using the following equation (2). FIG. 6 shows the measurement results. 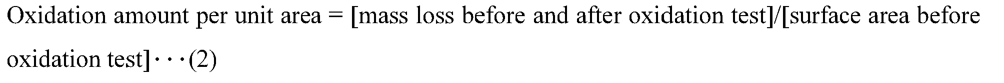 Oxidation amount per unit area = [mass loss before and after oxidation test]/[surface area before oxidation test] (2)

According to the oxidation test shown in FIG. 6, the oxidation amount per unit area of the manufactured articles A and B was maintained at approximately 0.2 mg/cm² even after 1000 hours, which is a suppressed oxidation amount per unit area compared to 0.26 mg/cm² for the manufactured article C in the comparative example. From these results, it was confirmed that the high-temperature oxidation resistance is excellent.

### (Mechanical properties)

Tensile test specimens (parallel portion diameter: 3 mm, gauge length: 7 mm) conforming to the standard test (ASTM E8) were prepared for the aforementioned manufactured articles A, B, and C. Tensile tests at room temperature (22°C) were conducted on these tensile test specimens using an INSTRON 5982 (manufactured by Instron) to determine the tensile strength, 0.2% yield strength, elongation, and reduction of area. Further, hardness was measured using a Vickers hardness tester (FM-110: manufactured by Future-Tech) at five points: the center of the test specimen and at distances of 2 to 3 mm up, down, left, and right from the center, with a load of 10 kg held for 30 seconds, and the average value was calculated. The reduction of area was expressed as a percentage by dividing the cross-sectional area of the necked portion after fracture by the original cross-sectional area. The results are shown in Table 5.

**[Table 5]**

| | Hardness (HV 1 O) | Yield strength (MPa) | Tensile strength (MPa) | Elongation (% ) | Reduction of area (%) |
|---|---|---|---|---|---|
| Manufactured article A (Example) | 235 | 659 | 728 | 39.3 | 73.5 |
| Manufactured article B (Example) | 243 | 679 | 752 | 38.9 | 75.9 |
| | | 663 | 732 | 37.7 | 73.6 |
| Manufactured article C (Comparative Example) | 315 | 777 | 843 | 3 | 3.3 |

Compared to the manufactured article C (comparative example), the manufactured articles A and B (examples) showed lower hardness. The lower hardness of the manufactured articles A and B is considered to be due to the decrease in the amount of Cr carbide precipitation, as shown in FIG. 2, where only a small amount of TiC precipitation exists at the grain boundaries.

### Reference Signs List

1: Ti carbide precipitation phase
2: Cr carbide precipitation phase
3: Edge portion cracking
4: Cracking

## Claims

1. An Fe-Cr-Al-based alloy powder (10) for additive manufacturing, comprising, by mass%,
20% to 30% Cr,
2.0% to 7.0% Al,
more than 0.15% but 0.75% or less Ti,
0.001% to 0.010% C, and
a remainder being Fe and unavoidable impurities,
wherein the unavoidable impurities comprise:
0.3% or less Si,
0.3% or less Mn,
0.3% or less Ni,
0.1% or less Zr,
0.01% or less B,
0.01% or less S,
0.01% or less P,
0.04% or less O, and
0.001% or less N,
wherein a content of Cr, Al, Ti, Si, Mn, Ni, Zr, B, S, and P is analyzed by inductively coupled plasma analysis, and a content of C, O, and N is determined by gas analysis using a combustion method,
the Fe-Cr-Al-based alloy powder (10) **characterized in that**
70 ≦ (Ti/C) ≦ 300 is satisfied.

2. The Fe-Cr-Al-based alloy powder (10) according to claim 1, wherein D50, which is a particle diameter at which a cumulative value reaches 50 volume% in laser diffraction particle size distribution measurement, is 10 to 60 µm.

3. The Fe-Cr-Al-based alloy powder (10) according to claim 1, wherein D50, which is a particle diameter at which a cumulative value reaches 50 volume% in laser diffraction particle size distribution measurement, is 30 to 250 µm.

4. An Fe-Cr-Al-based alloy member (70), which is an additively manufactured article (70), comprising, by mass%,
20% to 30% Cr,
2.0% to 7.0% Al,
more than 0.15% but 0.75% or less Ti,
0.001% to 0.010% C, and
a remainder being Fe and unavoidable impurities,
wherein the unavoidable impurities comprise:
0.3% or less Si,
0.3% or less Mn,
0.3% or less Ni,
0.1% or less Zr,
0.01% or less B,
0.01% or less S,
0.01% or less P,
0.04% or less O, and
0.001% or less N,
wherein a content of Cr, Al, Ti, Si, Mn, Ni, Zr, B, S, and P is analyzed by inductively coupled plasma analysis, and a content of C, O, and N is determined by gas analysis using a combustion method,
wherein carbides precipitating at grain boundaries of crystal grains are Ti carbides with an average diameter of 100 nm or less in equivalent circle diameter as determined by using a scanning transmission electron microscope,
the Fe-Cr-Al-based alloy member (70) **characterized in that**
70≦(Ti/C)≦300 is satisfied.

5. The Fe-Cr-Al-based alloy member (70) according to claim 4, wherein a number density of the Ti carbides in a cross-sectional structure observation is 50 or less per 1 µm² as determined by using a scanning transmission electron microscope.

6. The Fe-Cr-Al-based alloy member (70) according to claim 4 or 5, wherein a melting and solidification structure of the additively manufactured article (70) comprises columnar crystals, and an average grain diameter of the columnar crystals is 100 µm or less in equivalent circle diameter as determined by electron back-scatter diffraction.

7. The Fe-Cr-Al-based alloy member (70) according to claim 4 or 5, wherein an elongation of the additively manufactured article (70) is 30% or more as determined in accordance with a standard test ASTM E8, and a reduction of area is 60% or more as determined in accordance with a standard test ASTM E8 .

8. The Fe-Cr-Al-based alloy member (70) according to claim 4 or 5, wherein an oxidation amount per unit area defined as [mass loss before and after oxidation test]/[surface area before oxidation test] is 0.25 mg/cm² or less as determined in a high-temperature oxidation test conducted in an atmospheric furnace at 900°C for more than 0 hours and up to 1000 hours.

9. A method for producing an Fe-Cr-Al-based alloy member (70), comprising: using an Fe-Cr-Al-based alloy powder (10) that comprises, by mass%,
20% to 30% Cr,
2.0% to 7.0% Al,
more than 0.15% but 0.75% or less Ti,
0.001% to **0.010% C,** and
a remainder being Fe and unavoidable impurities,
wherein the unavoidable impurities comprise:
0.3% or less Si,
0.3% or less Mn,
0.3% or less Ni,
0.1% or less Zr,
0.01% or less B,
0.01% or less S,
0.01% or less P,
0.04% or less O, and
0.001% or less N,
wherein a content of Cr, Al, Ti, Si, Mn, Ni, Zr, B, S, and P is analyzed by inductively coupled plasma analysis, and a content of C, O, and N is determined by gas analysis using a combustion method; and
performing additive manufacturing by irradiating the Fe-Cr-Al-based alloy powder (10) with a laser beam or an electron beam for melting and solidification, wherein a heat source energy density J is set within a range of 20 to 120 J/mm³, as defined by the following equation (1): $J = P / \left(v\times a\times t\right)$ (1)
where J is the heat source energy density (J/mm³), P is a power of the laser beam or electron beam (W), v is a scanning speed (mm/s), a is a scanning pitch (mm), and t is a layer thickness (mm),
the method **characterized in that**
70 ≦ (Ti/C) ≦ 300 is satisfied.

10. The method for producing the Fe-Cr-Al-based alloy member (70) according to claim 9, wherein in the additive manufacturing, an additively manufactured article (70) is formed on a base plate, and when forming the additively manufactured article (70) on the base plate, a support member is interposed between the base plate and an additively manufactured article (70).

## Patentansprüche

1. Fe-Cr-Al-basierendes Legierungspulver (10) für die additive Fertigung, umfassend in Massenprozent:
20 % bis 30 % Cr,
2,0 % bis 7,0 % Al,
mehr als 0,15 %, jedoch höchstens 0,75 % Ti,
0,001 % bis 0,010 % C und
einen Rest, der aus Fe und unvermeidbaren Verunreinigungen besteht,
wobei die unvermeidbaren Verunreinigungen umfassen:
0,3 % oder weniger Si,
0,3 % oder weniger Mn,
0,3 % oder weniger Ni,
0,1 % oder weniger Zr,
0,01 % oder weniger B,
0,01 % oder weniger S,
0,01 % oder weniger P,
0,04 % oder weniger O und
0,001 % oder weniger N,
wobei ein Gehalt an Cr, Al, Ti, Si, Mn, Ni, Zr, B, S und P mittels induktiv gekoppelter Plasmaanalyse analysiert wird und ein Gehalt an C, O und N mittels Gasanalyse unter Verwendung eines Verbrennungsverfahrens bestimmt wird,
wobei das Fe-Cr-Al-basierende Legierungspulver (10) **dadurch gekennzeichnet ist, dass**
70 ≦ (Ti / C) ≦ 300 erfüllt ist.

2. Fe-Cr-Al-basierendes Legierungspulver (10) nach Anspruch 1, wobei D50, das ein Partikeldurchmesser ist, bei dem ein kumulativer Wert von 50 Vol.-% bei der Laserbeugungs-Partikelgrößenverteilungsmessung erreicht wird, 10 bis 60 µm beträgt.

3. Fe-Cr-Al-basierendes Legierungspulver (10) nach Anspruch 1, wobei D50, das ein Partikeldurchmesser ist, bei dem ein kumulativer Wert von 50 Vol.-% bei der Laserbeugungs-Partikelgrößenverteilungsmessung erreicht wird, 30 bis 250 µm beträgt.

4. Fe-Cr-Al-basierendes Legierungsbauteil (70), das ein additiv gefertigtes Erzeugnis (70) ist, umfassend in Massenprozent,
20 % bis 30 % Cr,
2,0 % bis 7,0 % Al,
mehr als 0,15 %, jedoch höchstens 0,75 % Ti,
0,001 % bis 0,010 % C und
einen Rest, der aus Fe und unvermeidbaren Verunreinigungen besteht,
wobei die unvermeidbaren Verunreinigungen umfassen:
0,3 % oder weniger Si,
0,3 % oder weniger Mn,
0,3 % oder weniger Ni,
0,1 % oder weniger Zr,
0,01 % oder weniger B,
0,01 % oder weniger S,
0,01 % oder weniger P,
0,04 % oder weniger O und
0,001 % oder weniger N,
wobei ein Gehalt an Cr, Al, Ti, Si, Mn, Ni, Zr, B, S und P mittels induktiv gekoppelter Plasmaanalyse analysiert wird und ein Gehalt an C, O und N mittels Gasanalyse unter Verwendung eines Verbrennungsverfahrens bestimmt wird,
wobei die an den Korngrenzen der Kristallkörner ausscheidenden Karbide Ti-Karbide mit einem durchschnittlichen Durchmesser von 100 nm oder weniger im Äquivalentkreisdurchmesser sind, wie mittels Verwendung eines Rastertransmissionselektronenmikroskops bestimmt,
wobei das Fe-Cr-Al-basierende Legierungsbauteil (70) **dadurch gekennzeichnet ist, dass**
70 ≦ (Ti / C) ≦ 300 erfüllt ist.

5. Fe-Cr-Al-basierendes Legierungsbauteil (70) nach Anspruch 4, wobei eine Anzahldichte der Ti-Karbide bei einer Querschnittsstrukturbeobachtung 50 oder weniger pro 1 µm² beträgt, wie mittels Verwendung eines Rastertransmissionselektronenmikroskops bestimmt.

6. Fe-Cr-Al-basierendes Legierungsbauteil (70) nach Anspruch 4 oder 5, wobei eine Schmelz- und Erstarrungsstruktur des additiv gefertigten Erzeugnisses (70) säulenförmige Kristalle umfasst und ein durchschnittlicher Korndurchmesser der säulenförmigen Kristalle im Äquivalentkreisdurchmesser 100 µm oder weniger beträgt, wie bestimmt mittels Elektronenrückstreubeugung.

7. Fe-Cr-Al-basierendes Legierungsbauteil (70) nach Anspruch 4 oder 5, wobei eine Dehnung des additiv gefertigten Erzeugnisses (70) 30 % oder mehr beträgt, wie bestimmt gemäß einer Normprüfung ASTM E8, und eine Querschnittsverminderung 60 % oder mehr beträgt, wie bestimmt gemäß einer Normprüfung ASTM E8.

8. Fe-Cr-Al-basierendes Legierungsbauteil (70) nach Anspruch 4 oder 5, wobei eine Oxidationsmenge pro Flächeneinheit, definiert als [Massenverlust vor und nach Oxidationsprüfung] / [Oberflächeninhalt vor Oxidationsprüfung], 0,25 mg/cm² oder weniger beträgt, wie bestimmt in einer Hochtemperaturoxidationsprüfung, die in einem Atmosphärenofen bei 900 °C für mehr als 0 Stunden und bis zu 1000 Stunden durchgeführt wurde.

9. Verfahren zur Herstellung eines Fe-Cr-Al-basierenden Legierungsbauteils (70), umfassend: Verwendung eines Fe-Cr-Al-basierenden Legierungspulvers (10), das umfasst in Massenprozent,
20 % bis 30 % Cr,
2,0 % bis 7,0 % Al,
mehr als 0,15 %, jedoch höchstens 0,75 % Ti,
0,001 % bis 0,010 % C und
einen Rest, der aus Fe und unvermeidbaren Verunreinigungen besteht,
wobei die unvermeidbaren Verunreinigungen umfassen:
0,3 % oder weniger Si,
0,3 % oder weniger Mn,
0,3 % oder weniger Ni,
0,1 % oder weniger Zr,
0,01 % oder weniger B,
0,01 % oder weniger S,
0,01 % oder weniger P,
0,04 % oder weniger O und
0,001 % oder weniger N,
wobei ein Gehalt an Cr, Al, Ti, Si, Mn, Ni, Zr, B, S und P mittels induktiv gekoppelter Plasmaanalyse analysiert wird und ein Gehalt an C, O und N mittels Gasanalyse unter Verwendung eines Verbrennungsverfahrens bestimmt wird; und
Durchführung einer additiven Fertigung durch Bestrahlung des Fe-Cr-Al-basierenden Legierungspulvers (10) mit einem Laserstrahl oder einem Elektronenstrahl zum Schmelzen und Erstarren, wobei eine Wärmequellen-Energiedichte J innerhalb eines Bereichs von 20 bis 120 J/mm³ eingestellt wird, wie durch die folgende Gleichung (1) definiert: $J = P / \left(v\times a\times t\right)$ (1)
wobei J die Wärmequellen-Energiedichte (J/mm³) ist, P die Leistung des Laserstrahls oder Elektronenstrahls (W) ist, v eine Abtastgeschwindigkeit (mm/s) ist, a ein Abtastabstand (mm) ist und t eine Schichtdicke (mm) ist,
wobei das Verfahren **dadurch gekennzeichnet ist, dass**
70 ≦ (Ti/C) ≦ 300 erfüllt ist.

10. Verfahren zur Herstellung des Fe-Cr-Al-basierenden Legierungsbauteils (70) nach Anspruch 9, wobei bei der additiven Fertigung ein additiv gefertigtes Erzeugnis (70) auf einer Grundplatte gebildet wird und beim Bilden des additiv gefertigten Erzeugnisses (70) auf der Grundplatte ein Stützelement zwischen der Grundplatte und einem additiv gefertigten Erzeugnis (70) angeordnet wird.

## Revendications

1. Poudre d'alliage à base de Fe-Cr-Al (10) destinée à la fabrication additive, comprenant, en % en masse,
de 20 % à 30 % de Cr,
de 2,0 % à 7,0 % d'Al,
plus de 0,15 % mais pas plus de 0,75 % de Ti,
de 0,001 % à 0,010 % de C, et
le reste étant constitué de Fe et d'impuretés inévitables,
dans laquelle les impuretés inévitables comprennent :
0,3 % ou moins de Si,
0,3 % ou moins de Mn,
0,3 % ou moins de Ni,
0,1 % ou moins de Zr,
0,01 % ou moins de B,
0,01 % ou moins de S,
0,01 % ou moins de P,
0,04 % ou moins d'O, et
0,001 % ou moins de N,
la teneur en Cr, Al, Ti, Si, Mn, Ni, Zr, B, S et P étant analysée par analyse au plasma à couplage inductif, et la teneur en C, O et N étant déterminée par analyse des gaz selon une méthode de combustion,
la poudre d'alliage à base de Fe-Cr-Al (10) étant **caractérisé en ce que**
70 ≤ (Ti/C) ≤ 300 est satisfait.

2. Poudre d'alliage à base de Fe-Cr-Al (10) selon la revendication 1, dans laquelle D50, qui correspond au diamètre de particule auquel une valeur cumulée atteint 50 % en volume lors d'une mesure de la distribution granulométrique par diffraction laser, est compris entre 10 et 60 µm.

3. Poudre d'alliage à base de Fe-Cr-Al (10) selon la revendication 1, dans laquelle D50, qui est le diamètre de particule pour lequel la valeur cumulée atteint 50 % en volume lors d'une mesure de la distribution granulométrique par diffraction laser, est compris entre 30 et 250 µm.

4. Élément en alliage à base de Fe-Cr-Al (70), qui est un article fabriqué par fabrication additive (70), comprenant, en % en masse,
de 20 % à 30 % de Cr,
de 2,0 % à 7,0 % d'Al,
plus de 0,15 % mais pas plus de 0,75 % de Ti,
0,001 % à 0,010 % de C, et
le reste étant constitué de Fe et d'impuretés inévitables,
les impuretés inévitables comprenant :
0,3 % ou moins de Si,
0,3 % ou moins de Mn,
0,3 % ou moins de Ni,
0,1 % ou moins de Zr,
0,01 % ou moins de B,
0,01 % ou moins de S,
0,01 % ou moins de P,
0,04 % ou moins d'O, et
0,001 % ou moins de N,
dans lequel la teneur en Cr, Al, Ti, Si, Mn, Ni, Zr, B, S, et de P est analysée par analyse au plasma à couplage inductif, et la teneur en C, O et N est déterminée par analyse des gaz à l'aide d'une méthode de combustion,
dans lequel les carbures se précipitant aux limites des grains cristallins sont des carbures de Ti ayant un diamètre moyen inférieur ou égal à 100 nm en diamètre circulaire équivalent, tel que déterminé à l'aide d'un microscope électronique à transmission à balayage,
l'élément en alliage à base de Fe-Cr-Al (70) étant caractérisé en ce que70 ≤ (Ti/C) ≤ 300 est satisfait.

5. L'élément en alliage à base de Fe-Cr-Al (70) selon la revendication 4, dans lequel la densité numérique des carbures de Ti, observée dans une structure en coupe transversale, est inférieure ou égale à 50 par 1 µm2, telle que déterminée à l'aide d'un microscope électronique à transmission à balayage.

6. L'élément en alliage à base de Fe-Cr-Al (70) selon la revendication 4 ou 5, dans lequel la structure de fusion et de solidification de l'article fabriqué par fabrication additive (70), comprend des cristaux colonnaires, et le diamètre moyen des grains des cristaux colonnaires est de 100 µm ou moins en diamètre circulaire équivalent, tel que déterminé par diffraction des électrons rétrodiffusés.

7. Élément en alliage à base de Fe-Cr-Al (70) selon la revendication 4 ou 5, dans lequel l'allongement de l'article fabriqué par fabrication additive (70) est de 30 % ou plus, tel que déterminé conformément à la norme d'essai ASTM E8, et une réduction de section est de 60 % ou plus, telle que déterminée conformément à la norme d'essai ASTM E8.

8. L'élément en alliage à base de Fe-Cr-Al (70) selon la revendication 4 ou 5, dans lequel la quantité d'oxydation par unité de surface, définie comme [perte de masse avant et après l'essai d'oxydation]/ [surface avant l'essai d'oxydation] est inférieure ou égale à 0,25 mg/cm², telle que déterminée lors d'un essai d'oxydation à haute température réalisé dans un four atmosphérique à 900 °C pendant une durée comprise entre plus de 0 heure et 1 000 heures.

9. Procédé de fabrication d'un élément en alliage à base de Fe-Cr-Al (70), comprenant : l'utilisation d'une poudre d'alliage à base de Fe-Cr-Al (10) qui comprend, en % en masse,
20 % à 30 % de Cr,
2,0 % à 7,0 % d'Al,
plus de 0,15 % mais pas plus de 0,75 % de Ti,
0,001 % à 0,010 % de C, et
le reste étant constitué de Fe et d'impuretés inévitables,
dans lequel les impuretés inévitables comprennent :
0,3 % ou moins de Si,
0,3 % ou moins de Mn,
0,3 % ou moins de Ni,
0,1 % ou moins de Zr,
0,01 % ou moins de B,
0,01 % ou moins de S,
0,01 % ou moins de P,
0,04 % ou moins d'O, et
0,001 % ou moins de N,
dans lequel la teneur en Cr, Al, Ti, Si, Mn, Ni, Zr, B, S et P est analysée par analyse au plasma à couplage inductif, et la teneur en C, O et N est déterminée par analyse des gaz à l'aide d'une méthode de combustion ; et
la mise en œuvre d'une fabrication additive par irradiation de la poudre d'alliage à base de Fe-Cr-Al (10) avec un faisceau laser ou un faisceau d'électrons en vue de sa fusion et de sa solidification, la densité d'énergie de la source de chaleur J étant réglée dans une plage comprise entre 20 et 120 J/mm³, telle que définie par l'équation (1) suivante : $J = P / \left(v\times a\times t\right)$ (1)
où J est la densité d'énergie de la source de chaleur (J/mm³), P est la puissance du faisceau laser ou du faisceau d'électrons (W), v est la vitesse de balayage (mm/s), a est le pas de balayage (mm) et t est l'épaisseur de la couche (mm),
le procédé étant caractérisé en ce que70 ≤ (Ti/C) ≤ 300 est satisfait.

10. Procédé de fabrication d'un élément en alliage à base de Fe-Cr-Al (70) selon la revendication 9, dans lequel, lors de la fabrication additive, un article fabriqué par fabrication additive (70) est formé sur une plaque de base, et lors de la formation de l'article fabriqué par ajout de matière (70) sur la plaque de base, un élément de support est intercalé entre la plaque de base et l'article fabriqué par ajout de matière (70).
